# EUROPEAN PATENT SPECIFICATION

(11) **EP 0 371 800 B1**
(45) Date of publication and mention of the grant of the patent: **19.04.1995**
(21) Application number: 89312483.4
(22) Date of filing: 30.11.1989
(51) Int. Cl.: H04N 1/04, H02P 8/00, H04N 1/17, H04N 1/21

(54) **An image reading system**
Bildlesesystem
Système de lecture d'image

(30) Priority: 30.11.1988 JP 303008/88
(43) Date of publication of application: 06.06.1990
(73) Proprietor: FUJITSU LIMITED, Kawasaki-shi, Kanagawa 211 (JP)
(72) Inventor: Kamiyama, Akira, Yokohama Kanagawa, 222 (JP)
(74) Representative: Stebbing, Timothy Charles

(56) References cited:
- PATENT ABSTRACTS OF JAPAN vol. 11, no. 61 (E-483)(2508) 25 February 1987,& JP-A-61 222367 (FUJITSU LTD) 02 October 1986,

## Description

The present invention relates to an image reading system such as a facsimile apparatus and more particularly to an image reading system using a charge storing type image sensor.

In such an image reading system, typically, an image sensor detects an image on a manuscript paper or the like on a line-by-line basis. The detection of a line in the image by the image sensor is called a "main scan" below, and may or may not involve movement of the image sensor relative to the manuscript paper. In addition, the manuscript paper is moved relative to the image sensor, so as to present successive lines of the image to the image sensor. This is called "sub-scanning" or apparatus scan" below. Normally, the paper is driven past the image sensor by a motor in order to achieve sub-scanning.

Recently, demand has been increasing for a low-cost, miniaturized image reading apparatus such as an image scanner or a facsimile apparatus (below, "facsimile"), and also for a low-cost, miniaturized image sensor and motor to be used with such an image reading apparatus.

To meet this demand, a contact-type image sensor has been developed in place of a CCD. The reading period of the image sensor has thus been increased from 2 ms/line in a CCD scanner to, for example, 5 ms/line or 10 ms/line, and thus, the reading speed/line has been slowed down. Here, the term "line" is used to refer to a main scanning line. The contact-type image sensor is a charge-storing-type image sensor which stores a predetermined amount of charge subjected to an opto-electrical conversion in a predetermined period. Therefore, the amount of charge stored varies with the period. Thus, it is necessary to complete a scan of one line within a predetermined period ("scan period").

To meet the low-cost requirement for the motor, a motor with a low response characteristic and low positional accuracy is adopted. Therefore, the reading position of the contact-type image sensor with respect to the paper can become shifted by a considerable amount.

In a conventional facsimile, a manuscript paper starts from a stopped state, increases its speed to a maximum and then decreases its speed until it stops. This is conducted in accordance with a motor control based on the amount of data which can be transmitted in one line.

In more detail, the facsimile determines, based on training before a transmission of image data, whether the data can be transmitted over the currently-used transmission line, for example, at 9600 bit/sec. If it cannot be transmitted at 9600 bit/sec, the fascimile further determines whether it can be transmitted at 7200 bit/sec. In accordance with such training, data is transmitted selectively at various speeds such as: 14400 bit/sec, 9600 bit/sec, 7200 bit/sec, 4800 bit/sec and 2400 bit/sec. This requires that the speed at which a manuscript paper to be transmitted is read should be variable. Thus, in a facsimile, the image data which has been read is compressed, the compression ratio varying depending on the kind of image. Furthermore, the transmission speed is not constant during reading. To prevent the buffer for storing the transmission data from being empty, and to prevent the buffer from overflowing, the speed at which the paper is read should be controlled. Therefore, a stepping motor, for example, can be used to drive the paper at a variable rate, by controlling the period of the driving pulses. An image sensor of a reading apparatus or a manuscript paper is moved a predetermined distance in the sub-scanning direction at each driving pulse.

Conventionally, the speed control of the image sensor or the manuscript paper is performed within a period given by an integer times the period for reading by an image sensor. However, when the reading period of an image sensor becomes slow, such as 5 ms/line or 10 ms/line as stated above, the reading position shift of the image sensor cannot be disregarded.

As an example, the manuscript shown in Figure 1A is moved under the conditions that the reading period of the image sensor is 10 ms/line scan, the pulse rate required for the stepping motor is 4 pulses/line, the sub-scanning line density is 7.7 lines/mm and the scanning speed of the reading apparatus (i.e. a reading cycle of the data on one main scanning line) is changed from 20 ms/line scan to 10ms/line scan. As mentioned above, the scanning speed of the reading apparatus (which is determined by the relative speed between the manuscript paper and the image sensor and is called an apparatus scan hereinafter) varies with the amount of data stored within a memory in which reading data in the reading apparatus is stored and the state of a transmission line to which a facsimile apparatus is connected.

The reading of the pattern shown in Figure 1A is described with regard to lines ℓ1 to ℓ7. The apparatus scan is at a speed of 20 ms/line from lines ℓ1 to ℓ3 and is at 10 ms/line between lines ℓ3 and ℓ7 (i.e. the speed of the apparatus scan is changed at line ℓ3 to a higher speed). However, the rotation speed of the motor cannot be immediately changed to 10 ms/line. As a result the positions of lines ℓ4 and ℓ5 are delayed as shown by lines ℓ4′ and ℓ5′ in Figure 1B. Thus, when the paper driving speed changes, the sub-scanning line density of 7.7 lines/mm is not maintained and the reading width (line spacing) is narrowed.

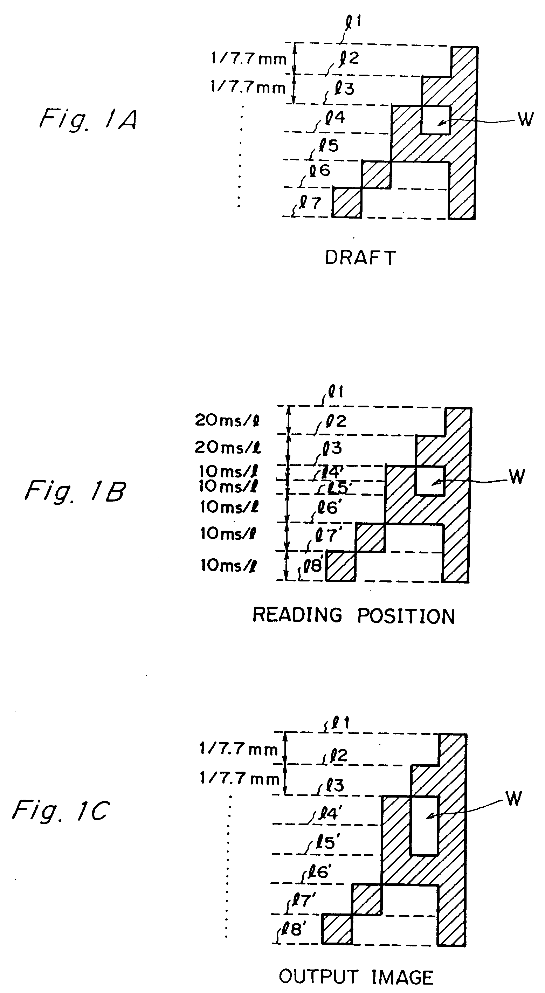

The image obtained by this reading operation, however, is reproduced at the constant rate of 7.7 lines/mm. Therefore, as shown in Figure 1C, the portion between lines ℓ3 and ℓ5′ of the character is extended. When the speed of the apparatus scan is reduced (i.e. when the paper is fed more slowly), the situation is reversed.

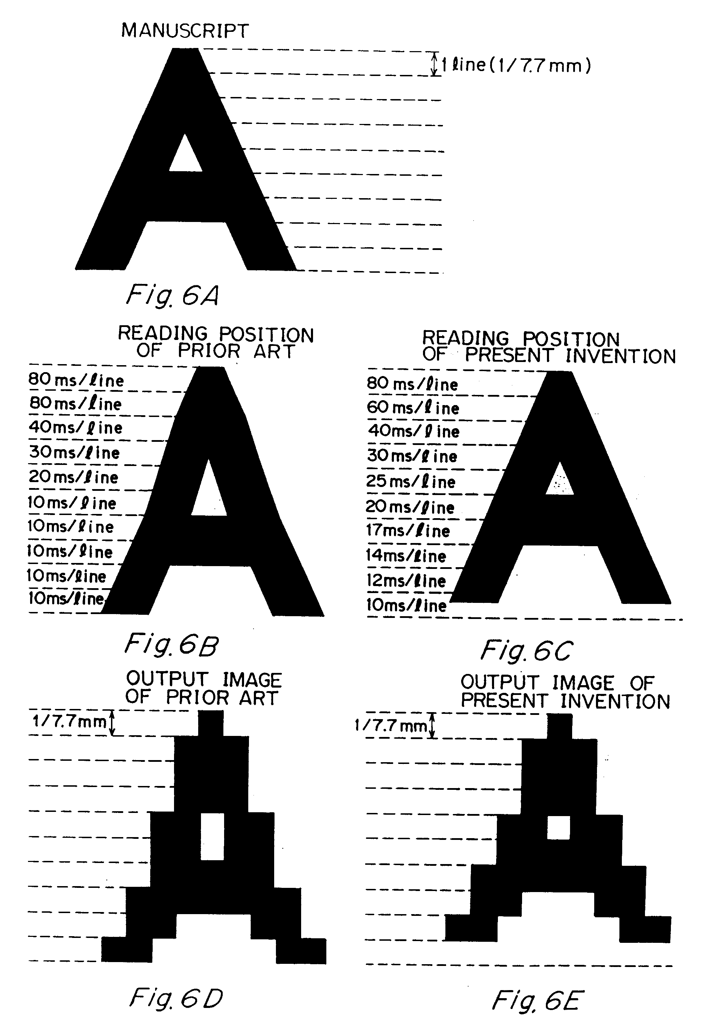

When the reading time period of the image sensor is at 10 ms/line scan, the pulse rate required for the motor drive is 4 pulses/line, the sub-scanning line density is 7.7 lines/mm, and the scanning speed of the reading apparatus is changed from 80 ms/line to 10 ms/line, then, the image shown in Figure 6A is read as having the form shown in Figure 6B in a prior art apparatus, whereas upon output, the image lines are spaced at equal intervals in the longitudinal direction of the paper. As a result, an output is obtained as shown in Figure 6D.

In the prior art, where the main scan by the image sensor is performed at 10 ms/line scan, the sub-scan by the apparatus may be increased from 40 to 30 to 20 to 10 ms/line scan. Then, upon a change from 20 to 10 ms/line, a shift in reading position of the image sensor of 1/154 mm/line may result with a line density of 7.7 line/mm. When the scan period decreases, i.e. the speed of an apparatus scan increases, from 30 to 20 ms/line, the shift in position becomes 1/30.8 mm/line.

When a motor with a poor transient response characteristic is used, the shift in reading position is caused because the reading position is controlled by a motor driving speed which is changed stepwise, i.e. to values corresponding to integer multiples of the reading period, thereby decreasing the quality of the image to be output.

Therefore, it is desirable to provide an image reading system in which a shift in image reading position upon a reading of an image by a reading apparatus is decreased.

According to the present invention, there is provided an image reading system comprising:
an image sensor for reading a manuscript by scanning it line by line;
driving means for moving the manuscript relative to the image sensor so that the image sensor scans successive lines within successive scan periods, the scan periods having a length selected from a plurality of discrete values;
driving control means for controlling the speed of the driving means by supplying it with pulses having a pulse cycle period dependent on the length of the scan period; and
speed setting means for varying the pulse cycle period of the pulses supplied by the driving control means in accordance with the length of the scan period;
characterised in that:
the speed setting means includes stopping means which are operable, in response to selection of a new length of the scan period, to stop the supply of said pulses after a predetermined number of said pulses are supplied within a scan period of an existing length, so that the speed of the driving means is gradually varied to a value in accordance with the new length of the scan period.

Reference is made, by way of example, to the accompanying drawings in which:
Figures 1A to 1C are views for explaining a problem of the prior art,
Figures 2A to 2E are views for explaining the principle of the present invention,
Figure 3A is a block diagram of an embodiment of the present invention,
Figure 3B is a block diagram showing the structure of the speed setting unit,
Figures 4A and 4B are views for explaining a comparison between the timings in the prior art and in the present invention,
Figures 5A and 5B are views for explaining a shift in a reading position by comparing the prior art with the present invention,
Figure 6A to 6E are views which compare the image data of the prior art with that of the present invention, and
Figure 7 is a detailed circuit diagram of an embodiment of the present invention.

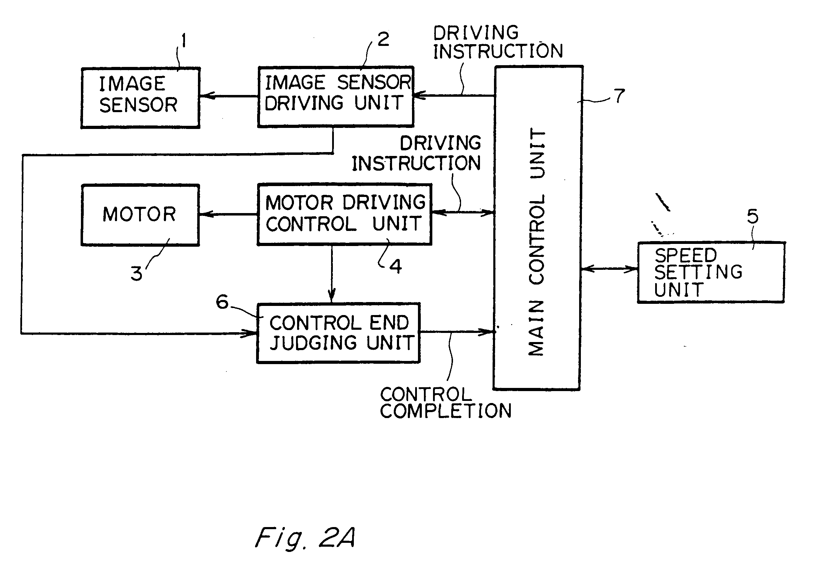

Referring to Figure 2A, this schematically shows parts of a reading apparatus including an image sensor driving unit 2 for driving a charge-storing-type image sensor 1, a motor drive control unit 4 for driving a stepping motor 3 so as to feed a paper, and a speed determining unit 5 for setting the speed of stepping motor 3.

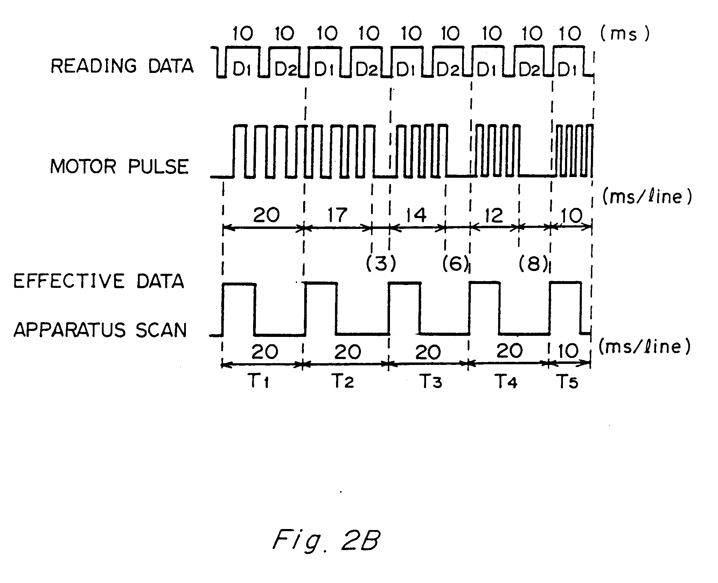

For example, when the apparatus scan (paper feed rate) by the reading apparatus using an image sensor whose reading time period is 10 ms, namely, a one-line data-obtaining cycle, is increased from 20 ms/line to 10 ms/line, cycles T₁, T₂, T₃ and T₄ of an apparatus scan (i.e. scan periods) are executed at 20 ms/line as shown in Figure 2B. This allows every line to be read twice by the image sensor producing two sets of read data D1 and D2. Normally, the initial data D1 is used, and the data D2 is discarded. The motor pulses are controlled in the following manner. At cycle T₂ of an apparatus scan, 4 pulses are provided during a period of 17 ms and a supply of pulses is stopped during a period of 3 ms. At cycle T₃, 4 pulses are supplied during a period of 14 ms and thus a supply of pulses is stopped during a period of 6 ms. At cycle T₄, 4 pulses are provided during a period of 12 ms, and no pulses are supplied during a period of 8 ms. In this way, the stepping motor is gradually adjusted to the new speed.

In this example, stepping motor 3 is subjected to a drive of 4-pulses/line. Therefore, a setting of the pulse supply, including a stopping period as recited above, is performed by speed setting unit 5. The motor drive control unit 4 is controlled by main control unit 7 based on a setting signal from speed setting unit 5, thereby producing pulses as stated above and controlling stepping motor 3. Control end judging unit 6 notifies a control completion within a scan period of respective apparatuses.

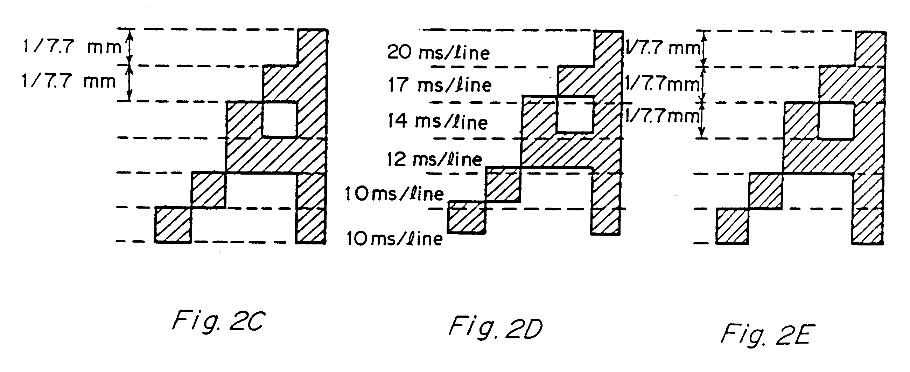

Therefore, when the image shown in Figure 2C is read, the reading position of the image sensor is as shown in Figure 2D. The reading of the data is performed twice per line, as stated above, and the former reading is made to provide effective data. Thus, the resulting image output becomes as shown in Figure 2E, thereby decreasing the influence of the shift in reading position.

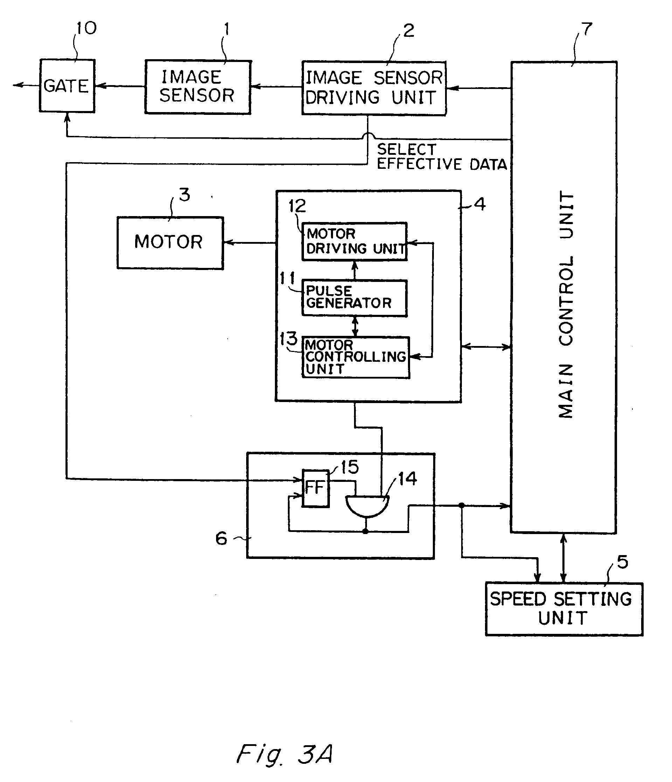

An embodiment of the present invention will now be explained by referring to Figures 3A to 6E.

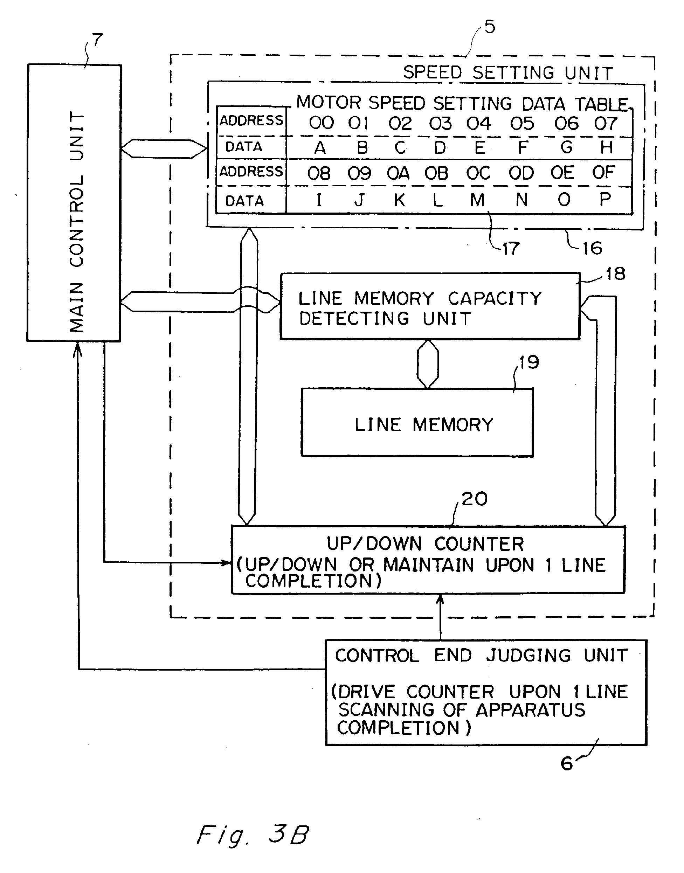

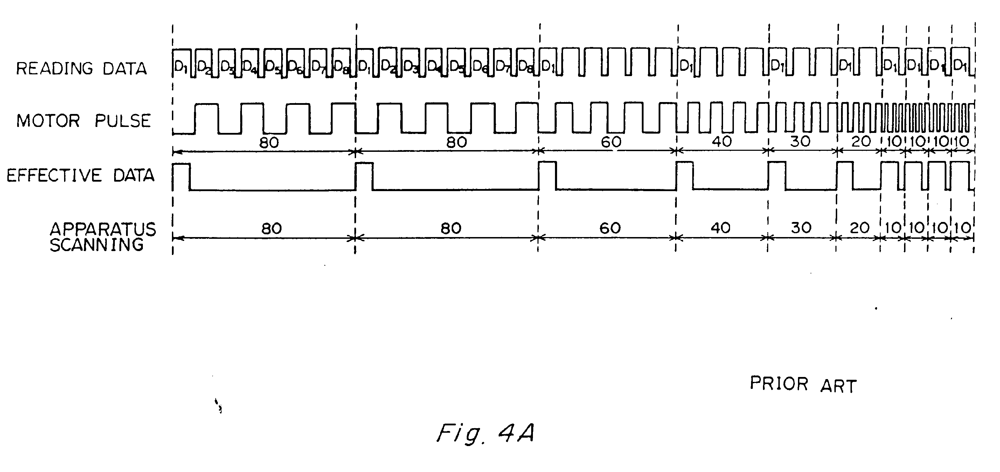

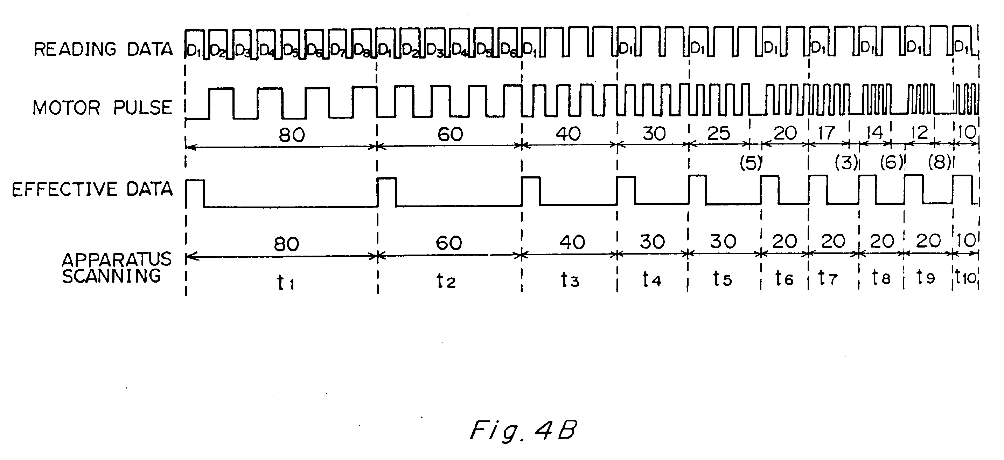

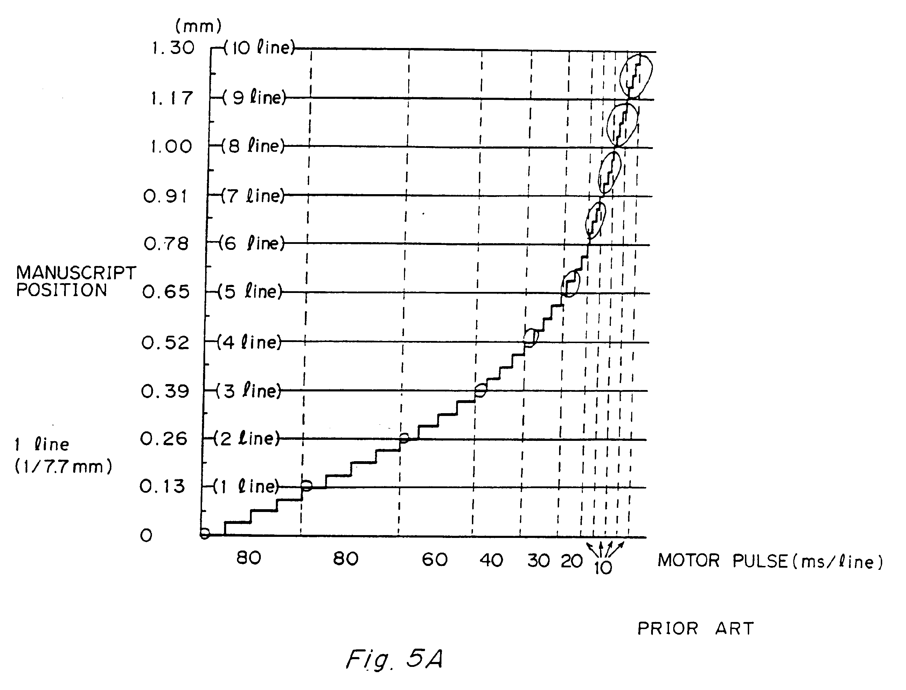

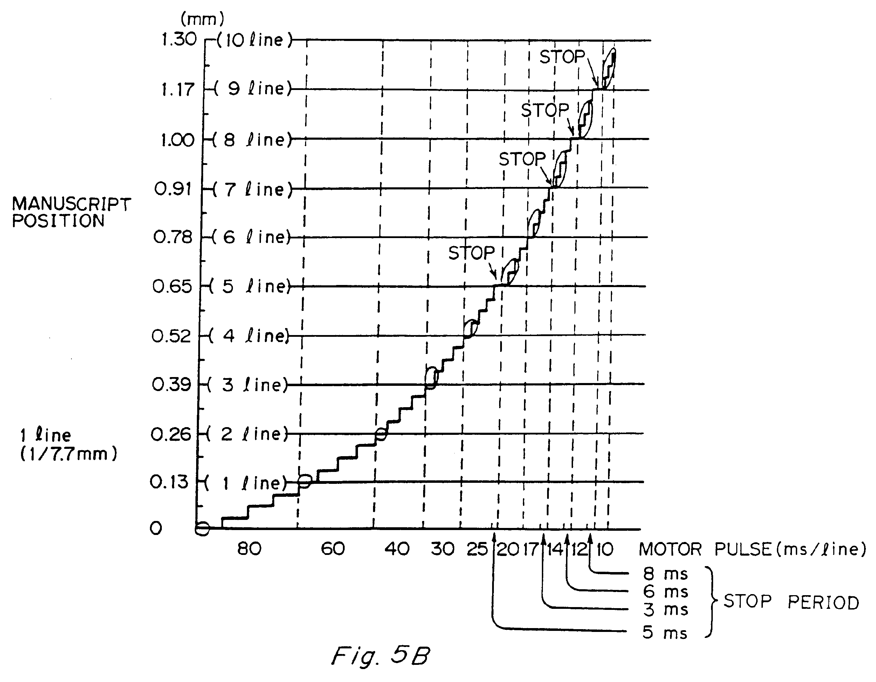

Figure 3A shows the structure of one embodiment of the present invention, Figure 3B shows the structure of the speed setting unit of this embodiment, Figures 4A and 4B are respectively views for explaining the timing chart of the prior art and that of the present invention, and Figures 5A and 5B show reading position shift in the prior art and in the present invention, respectively.

The same reference numbers are used in Figures 2A and 3A to represent the same portions. The embodiment shown in Figure 3A comprises a gate 10, pulse generator 11, motor driving unit 12, motor controlling unit 13, AND circuit 14 and latch 15.

Gate 10 is used to select an effective reading data obtained from a charge-storing-type image sensor. For example, as shown in Figure 4B, where the apparatus scanning speed is increased (scan period is decreased) from 80 ms/line to 10 ms/line, and a constant 10 ms/line scan is used for the image sensor, then read data D1,D2... of image sensor 1 are output every 10 ms. Only the first reading data D1 of the respective apparatus' scan period is made effective, as gate 10 is controlled to perform an on-and-off operation in synchronization with a scan period of respective apparatuses (destination facsimile machine). Therefore, an effective data-selecting signal is output from main control unit 7 and effective timing data, as shown in Figure 4B, is output from gate 10.

Pulse generating unit 11 outputs a motor pulse signal for driving stepping motor 3. Suppose that the rate of apparatus scanning (i.e. paper feed speed) is increased from 80 ms/line to 10 ms/line as described above. Then, motor pulse signals are output as shown in Figure 4B. Namely, while the speed of the apparatus scan is increased from 80 to 60 to 40 to 30 ms/line, motor pulses are output during the entire data-reading period. During the period when the scan speed is increased from second 30 ms/line to 10 ms/line, the motor pulses are selectively omitted, thereby controlling a shift in reading position as explained above with reference to Fig. 2B. That is, a motor stopping period of 5 ms is provided in period t₅, 3ms in period t₇, 6 ms in period t₈ and 8 ms in period t₉.

In the case where four pulses are required to drive the paper by one line relative to the image sensor, the scanning speed or reading period of image sensor 1 is 10 ms, and the apparatus scanning period is Xms, 10 ms=Xms/4 pulses and thus X=40 ms. Therefore, a period must be selectively provided during which the motor is stopped to correct the reading position when the apparatus scanning period is more than 40 ms. However, this period is not necessary when the apparatus scanning period is more than 40 ms.

In other words, if the reading period of the image sensor is m and one pulse period of the motor pulse is n, then when n ≧ m, the motor need not be stopped. However, when n < m, a period during which the motor is stopped should be provided to minimize the motor pulse driving speed difference caused when the apparatus scanning period is changed.

When a stepping motor with a bad transient characteristic is used, the stepping motor cannot easily respond to a change in rotation speed when operated at a high rotation speed. Therefore, phase delay is produced when the rotation increases in a stepped manner and a phase advance is generated when it decreases in a stepped manner. In order to decrease the phase advance and delay, the reading period is made an integer times the reading speed by the image sensor whenever the speed of the stepping motor (step motor) is changed in a stepped manner, for example, 20 ms/line to 10 ms/line. The present invention involves both changing the duration of the driving pulses supplied to the step motor, and stopping the driving pulses during the time interval between the end of the required number (e.g. four) of driving pulses of the step motor and the end of the scan period, this time interval being caused by a step-wise change in the rotation speed of the step motor.

As shown in Figure 3A, pulse generator 11 is provided with a counter. A count starts when the pulse generating period Tpms is given and a single pulse signal is produced every time 1/4 Tpms is counted, and the ending signal is produced upon completion of a TP count. Motor driving unit 12 produces a motor pulse in accordance with a motor pulse signal supplied by pulse generator 11.

Motor control unit 13 outputs an initiation signal or end signal and other control signals to pulse generator 11 or motor driving unit 12 in accordance with a control signal transmitted from main control unit 7 comprising a processor. A gate signal is output to AND circuit 14 of control end judging unit 6 at every fourth motor pulse signal. A control end judging signal "1" is output when an AND condition of a reading data D₁ of image sensor 1 at apparatus scan periods t₁, t₂... and every fourth motor pulse is established. Therefore, control end judging portion 6 provides latch unit 15 to maintain a falling point of the first reading data D1, thereby checking the AND condition. When the output of AND circuit 14 is "1", latch unit 15 is reset.

Figure 3B shows a structural view of speed setting unit 5. Speed setting unit 5 comprises ROM 16 with motor speed setting data table 17, detecting unit 18 for detecting a capacity in which the data is stored in line memory 19, line memory 19 comprising a RAM, and up/down counter 20 for performing up or down functions or maintaining functions.

Next, an operation of the embodiment of the present invention shown in Figure 3B is explained as an example in which the speed of apparatus scanning increases from 80 to 10ms/line as shown in Figure 4B.
(1) Line memory capacitor detecting unit 18 detects the present vacant capacity in line memory 19 in accordance with an instruction from main control unit 7. Main control unit 7 then performs an up/down or maintaining operation on counter 20 as a result of the detection of the vacant capacity of line memory 19. Counter 20 outputs the address of table 17. When the address value represented by the output of counter 20 is "0 0", data A corresponds to the address "0 0", namely, the data which is a motor pulse signal corresponding to an apparatus scan period of 80ms/line and represents the motor pulse generation period corresponding to the motor pulse shown in figure 4B. It is transmitted from ROM 16 to main control unit 7 and output from main control unit 7 to motor driving control unit 4. This enables pulse generator 11, which has the same structure as the prior art apparatus, to output the motor pulses. Namely, a motor pulse train in which the fourth motor pulse falls at the end of period t₁ is produced and is transmitted to stepping motor 3 by motor driving unit 12 to drive stepping motor 3. At a period t₁, reading data D₁ to D₈ of image sensor 1 are output and initial reading data D₁ is controlled to be output to gate 10 from main control unit 7. Thus, the effective data is output at a timing shown in Figure 4B. The falling-edge timing signal of reading data D₁ is transmitted from image sensor driving unit 2 to latch unit 15, thereby enabling latch unit 15 to produce "1". At period t₁, a timing signal "1" representing a falling-edge of the fourth motor pulse is output from motor driving control unit 4 to an AND circuit 14 to turn it on. Therefore, control end judging unit 6 outputs a control completion signal to main control unit 7 and an on signal of AND circuit 14 resets latch unit 15.
(2) Such a control can be conducted sequentially from the periods t₂ to t₄. Namely, when a lack of capacity is continuously recognized by line memory capacity detecting unit 18, counter 20 is incremented to increase the motor speed, thereby varying the address values from "00", to "01", "02" or "03" successively. Data A, B, C, D are stored in table 17 in correspondence with the address values "00" "01" "02" and "03" and, based on these values , motor driving control unit 4 varies the rotation speed of the motor so that it increases from 80ms/line to 30ms/line.
   When main control unit 7 requests a motor pulse signal from speed setting unit 5 at period t₅, speed setting unit 5 outputs four motor pulse signals, namely, data F of the address 04 in table 17, for the first 25ms of the 30ms period. Therefore, the corresponding motor pulse is output from pulse generator 11 and stepping motor 3 completes an operation during the first 25ms at the period t₅ responsive to the above operation and is put in a stopped state for the remaining 5ms. Timing signal "1" is outputted from motor driving control unit 4, 25ms after the start of period t₅, namely, at the time of the fall of a fourth motor pulse. Thus AND circuit 14 is turned on, thereby enabling control end judgement unit 6 to output the control completion signal. However, main control unit 7 recognizes that period t₅ has a time width of 30ms, and a control at period t₆ starts 5ms after the control end signal is transmitted.
(3) At period t₆, the same control as in (1) is conducted. At periods t₇ to t₉, the same control as in (2) is conducted. Namely, at period t₇, main control unit 7 outputs four motor pulse signals for an initial 17ms based on the output from speed setting unit 5. Therefore, a similar motor pulse is output from pulse generator 11 and the stepping motor 3 is driven for the initial 17ms of period t₇ in accordance with the output of pulse generator 11 and is put in a stopped state for the remaining 3ms period. Such operation is conducted in periods t₈ and t₉. Stepping motor 3 operates for the first 14ms at period t₈ and is put in a stopped state for the remaining 6ms period. It operates for the initial 12ms of period t₉ and is put in a stopped state for the remaining 8ms period. Only the reading data D₁ is used as an effective data for a respective period. Such control can be conducted up to period t₁₀.

In the prior art, stopped states are not provided as shown in Figure 4A. Thus, the effective data of the manuscript becomes as shown by the circles in Figure 5A, resulting in an inaccurate image output being produced because of the existence of shift of the reading position, as stated above.

In contrast, the present invention provides a stopped period as shown in Figure 4B and the resulting reading area on a manuscript is as shown by the circles in Figure 5B. Therefore, as shown in Figures 6C and 6E, the present invention can greatly decrease the influence of a shift in a reading position.

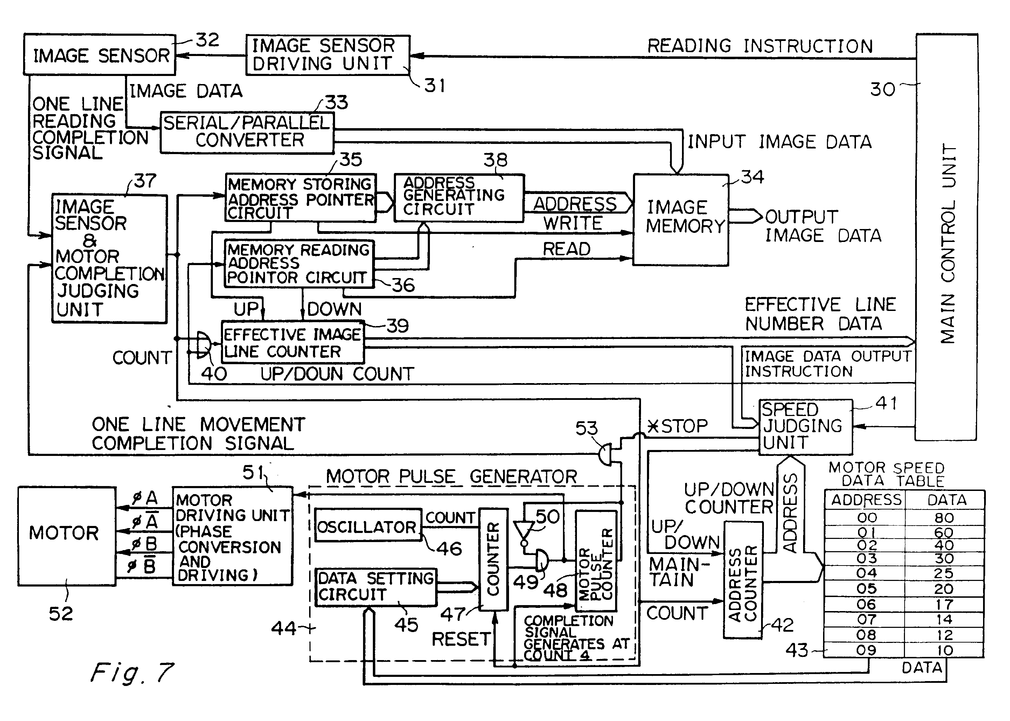

Figure 7 shows the embodiment of the present invention in more detail.

Main control unit 30 controls an entire apparatus such as a facsimile apparatus. When a document is transmitted by a facsimile apparatus, setting (i.e. presence) of a manuscript to be transmitted is recognized by main control unit 30 from a signal obtained from a sensor (not shown). When an operator depresses the transmission key, main control unit 30 outputs a reading instruction to image sensor driving unit 31. In accordance with this reading instruction, image sensor driving unit 31 starts driving image sensor 32.

Image sensor 32 is a sensor of a charge-storing-type which reads an image data of one line by driving image sensor driving unit 31 and outputs one line of dot data in a dot serial manner. This dot serial data is applied to serial/parallel converting unit 33 to provide parallel data to be applied to image memory 34 as input image data.

The read out parallel data is output in an FIFO structure. This embodiment has memory reading address pointer 35 and memory writing address pointer 36 which control a reading address and writing address of image memory 34. When image sensor 32 reads data, a signal indicating completion of a one-line reading is output to image sensor and motor completion judging unit 37. Image sensor and motor completion judging unit 37 comprises two input AND gates (later described). One line moving completion signal designating a completion of movement by one line is made to H level and when a one reading completion signal is at H level, H level is output. The H level output of image sensor and motor completion judging unit 37 is applied to memory writing address pointer 35 to increment the value of the pointer. Memory writing address pointer 35 produces an input image data output from image sensor 32 to produce an address pointer designating the position at which data should be stored in image memory 34. When input image data is stored in image memory 34, address generator 38 generates a storing address of image memory 34 based on an address output from memory writing address pointer 35, thereby making an access to image memory 34. Namely, every time one line is read, data is stored in image memory 34 and memory writing address pointer 35 increments the address point value.

On the other hand, when memory writing address pointer 35 applies an up signal to effective image line counter (up/down counter) 39, the output (H level) of image sensor and motor completion judging unit 37 is applied to a count input of effective image line counter 39 through OR gate 40. When an up signal is added to effective image line counter 39, and the H level output signal is applied to effective image line counter 39 from image sensor and motor completion judging unit 37 through OR gate 40, effective image line counter 39 increments a count value.

Image memory 34 is a buffer for temporarily storing read out input image data and the image data to be transmitted is read out from image memory 34 during the period when main control unit 30 reads a manuscript by using the image sensor. Therefore, main control unit 30 adds the image data output designating signal into effective image line counter 39 through memory reading address pointer 36 and OR gate 40. Memory reading address pointer 36 designates a reading address pointer of image memory 34 upon reading and address generator 38 generates a reading address based on the output of address pointer 36, thereby making access to image memory 34. Based on this access, image memory 34 outputs read-out image data. Memory reading address pointer 36 applies a down signal to output effective image line counter 39, enabling effective image line counter 39 to perform one down count. Namely, effective image line counter 39 performs an up count every time one line of data is stored in image memory 34 and performs a down count every time one line data is read out from image memory 34. Therefore, the value of effective image line counter 39 is equal to the number of lines of data stored in image memory 34. Main control unit 30 receives the output of effective image line counter 39, namely, effective line number data. When data of image memory 34 would overflow if the manuscript is read at the present speed, main control unit 30 decreases a movement speed for reading the manuscript to avoid the overflow data in image memory 34. When the number of effective data in image memory 34 is relatively small, the speed at which the manuscript is read is increased to avoid the situation in which data does not exist in image memory 34. In a modem used for apparatus such as facsimile apparatus, the data must be transmitted continuously for one manuscript unit and the reading speed is controlled-to avoid a situation in which the number of effective lines becomes 0 during the period of reading one transmission. A control of a reading speed will be explained in more detail hereinafter.

The output of effective image line counter 39 is applied to speed judging unit 41. Speed judging unit 41 determines, based on the effective line number, whether the present speed should be increased, maintained or decreased. The result of the determination in speed judging unit 41 is output to address counter 42 comprising an up/down counter. The address counter 42 has an up input terminal and a down input terminal and speed judging unit 41 applies an instruction signal (H level) to an up input terminal when it determines that an increase in speed is required. The instruction signal (H level) which is output based on the signal from image sensor and motor completion judging unit 37 changes address counter 42. When speed judging unit determines that the present speed should be reduced, a clock is input to the down count input terminal of address counter 42 and whether the address counter 42 performs an up or down count is determined based on the content of the data table 43. Address counter 42 changes the count value based on the clock. The count value of address counter 42 is applied to an address terminal of motor speed data table 43. Motor speed data table 43 outputs the speed data corresponding to the count value selected from the speed data previously stored in motor speed data table 43. At this time, speed judging unit 41 performs the role of setting the address count value within a range of data. It then generates a *STOP signal when image memory 34 overflows even when reading is conducted at the lowest speed and stops the reading operation by AND gate 53.

Motor speed data table 43 stores 80, 60, 40, 30, 25, 20, 17, 14, 12, 10 in accordance with the addresses 00 to 09 as shown in Figure 7. Here, values 80, 60, ...are in msec corresponding to the reading speed of one line, which is explained above.

The output of motor speed data table 43 is applied to motor pulse generator 44 and data setting circuit 45. Then pulse generator 44 generates a pulse with a period corresponding to that of motor speed data table 43, thus enabling a period of the motor pulses to be synchronized with a reading period of image sensor 32. The output of motor speed data table 43 is applied to data setting circuit 45 which stores the data. The data corresponds to the period of the motor pulse and counter 47 is a presettable counter which loads the speed data stored in data setting circuit 45 upon starting the count, thereby performing a down count. The clock period of oscillator 46 is 1/4 msec and the output of the oscillator is applied to counter 47. Pulses of 1/4 the period of the value stored in the data setting circuit 45 are applied to motor pulse counter 48 and motor driving unit 51 through AND gate 49 by means of counter 47. At this time, motor pulse counter 48 does not count four pulses. Therefore, AND gate 49 is turned on through inverter 50.

Motor pulse counter 48 is a 1/4 frequency divider which outputs one line movement completion signal after four clocks are applied to counter 47. As the output of motor pulse counter 48 is applied to AND gate 49 through inverter 50, inverter 50 is turned off and thereafter the output clock from the counter 47 is prevented from being applied to motor pulse counter 48 or motor driving unit 51. Therefore, until the reset signal is applied, motor pulse counter 48 is put in a stopped state and this corresponds to the time period necessary for achieving synchronization with a reading period of image sensor 32.

When motor pulse counter 48 is put in a stopped state in accordance with an above operation, a one line movement completion signal is output. Therefore, when image sensor and motor completion judging unit 37 receives a one-line reading completion signal, it outputs an H level signal, which resets motor pulse counter 48. Counter 47 advances the counting operation and is simultaneously reset by outputs of H level from image sensor and motor completion judging unit 37 and is therefore returned to its initial state to perform the same operation repeatedly.

The output of counter 47 is applied to motor driving unit 51 through AND gate 49 to drive stepping motor 52 to advance the phase at every one pulse, thereby controlling the rotation of the motor to move the manuscript, for example.

The above operation is summarized as follows. Motor pulse generator 44 produces four pulses based on the value stored in data set circuit 45 and provides a stopped period to be synchronized with n times the reading period of image sensor 32.

Motor speed data table 43 previously stores the data corresponding to the required speed and increases a rotation speed with less phase delay even if a requirement for speeding up the motor is continuously produced, thereby suppressing a data shift upon reading a manuscript.

In Figure 4B, the motor does not stop during the stopped period of t₅ to t₉ but the rotation of the motor increases gradually as the period in which the driving pulse is produced is shortened. In the prior art, the rotation is changed abruptly, thereby causing a relatively large phase delay. In the present invention, the rotation of the motor is increased gradually when it is changed, thereby decreasing the error caused by phase advance or phase delay.

In the embodiment of the present invention, a step motor for four phases is used but the step motor of the present invention is not limited to the four phase type. Motor pulse counter 48 formed of an n-digit counter corresponding to n phases of stepping motor 52 can be applied to an n phase stepping motor.

As shown in Figure 6A, when an image is read and output, the reading position in the prior art is as shown in Figure 6B. As a result, a transcript output with a distortion is produced, as shown in Figure 6B. In contrast, in the present invention, the reading position of the image sensor is as shown in Figure 6C and the output is subjected to less distortion, as shown in Figure 6E.

As described above, the phase delay or advance always occurs when a rotation speed of the step motor is changed. Generally speaking, the error in phase is not important when the rate of the speed change is slow. However, if it is necessary to decrease the error caused upon a slow change of the rotation speed, for example, during the period from 80ms to 30ms/line in Figure 6B, then a table shown in the above embodiment is provided to change the rotation speed at which a relatively small error is caused. For example, as shown in Figure 6C, the scan period (thus, the rotation speed of the step motor) is changed in a sequence 80ms, 60ms, 40ms, 30ms, 25ms and 20ms. The speed of the step motor is not merely changed from 80ms/line to 20ms/line but is determined based on the content of the table in which the value of the speed for reducing the error of the phase is provided although the speed of the step motor changes, thereby enabling the manuscript or the image sensor to be moved with a high accuracy.

In the above embodiment of the present invention, the control of the stepping motor is conducted by a motor pulse with a period of integer times the reading period of the reading data for the period t₁ to t₄, based on the table content for the period when the change of speed is relatively small, and the speed of the stepping motor is changed from 20ms/line to 10ms/line, based on the table content for the period when the change of the rotation speed is relatively large, and an empty time period without pulses is provided during the period of t₆ to t₁₀ in Figure 4B, thereby enabling an accuracy of the apparatus to be further increased as a whole.

The above explanation is related to the case where the apparatus scanning speed is changed from 80 ms/line to 10ms/line. However, the present invention is not limited to this case.

In the present invention, the apparatus for performing up and down control scan can be smoothly conducted without making the period of the apparatus scan equal to an integer times the reading period of the image sensor and without making the motor control period corresponding to a predetermined integer number of motor pulses equal to integer times the reading period.

Therefore, according to the present invention, the accuracy of the reading position of the image sensor and the transmitting position of the manuscript can be greatly increased, thereby effectively decreasing the shift of the reading position.

## Claims

1. An image reading system comprising:
an image sensor (1) for reading a manuscript by scanning it line by line;
driving means (3) for moving the manuscript relative to the image sensor (1) so that the image sensor scans successive lines within successive scan periods (t₁, t₂, t₃,..), the scan periods having a length selected from a plurality of discrete values;
driving control means (4) for controlling the speed of the driving means (3) by supplying it with pulses having a pulse cycle period dependent on the length of the scan period; and
speed setting means (5) for varying the pulse cycle period of the pulses supplied by the driving control means (4) in accordance with the length of the scan period;
characterised in that:
the speed setting means (5) includes stopping means which are operable, in response to selection of a new length of the scan period, to stop the supply of said pulses after a predetermined number of said pulses are supplied within a scan period of an existing length, so that the speed of the driving means is gradually varied to a value in accordance with the new length of the scan period.

2. An image reading system according to claim 1, wherein said stopping means is operable over a plurality of successive scan periods of the existing length, before said speed setting means (5) adopts the new length of the scan period.

3. An image reading system according to claim 1 or 2, wherein said plurality of discrete values of the scan period (t₁, t₂, .... t₁₀) are integer multiples of a reading period (D₁, D₂, .... D₈) required for the image sensor (1) to scan each line.

4. An image reading system according to claim 3, wherein the image sensor (1) scans each line an integer number of times within the scan period.

5. An image reading system according to claim 4, further comprising buffer means (19) for temporarily storing data read by the image sensor (1), and wherein, within each scan period, the buffer means stores only the data generated by a first scan of the line by the image sensor.

6. An image reading system according to claim 3, 4 or 5, wherein said stopping means is operable when the period of one of said pulses is less than the reading period of the image sensor (1).

7. An image reading system according to any preceding claim, wherein the driving control means (4) comprises a data table (43) for determining the pulse cycle period in accordance with the scan period, and a pulse generator (44) for generating said pulses based on data obtained from said data table.

8. An image reading system according to any preceding claim, wherein the driving means (3) is a stepping motor having a number of phases corresponding to said predetermined number of pulses.

9. An image reading system according to any preceding claim, further comprising buffer means (19) for temporarily storing data read by the image sensor (1), and wherein the scan period is selected in accordance with the amount of data being held in the buffer means.

10. An image reading system according to any preceding claim, for use in facsimile transmission, wherein the scan period is selected in accordance with the quality of a transmission line being used.

## Patentansprüche

1. Bildlesesystem enthaltend:
einen Bildsensor (1) zum Lesen eines Manuskripts durch Abtastung desselben Zeile um Zeile;
eine Treibeeinrichtung (3) zum Bewegen des Manuskripts relativ zu dem Bildsensor (1) so, daß der Bildsensor sukzessive Zeilen innerhalb sukzessiver Abtastperioden (t₁, t₂, t₃ ...) abtastet, wobei die Abtastperioden eine aus einer Anzahl von diskreten Werten ausgewählte Länge haben;
eine Treibesteuereinrichtung (4) zur Steuerung der Geschwindigkeit der Treibeeinrichtung (3) durch Zuführung von Impulsen zu dieser, die eine von der Länge der Abtastperiode abhängige Impulszyklusperiode haben; und
eine Geschwindigkeitseinstelleinrichtung (5) zum Variieren der Impulszyklusperiode der von der Treibesteuereinrichtung (4) zugeführten Impulse entsprechend der Länge der Abtastperiode;
dadurch gekennzeichnet, daß
die Geschwindigkeitseinstelleinrichtung (5) eine Stoppeinrichtung enthält, welche in Ansprache auf die Wahl einer neuen Länge der Abtastperiode zum Stoppen der Zuführung der Impulse, nachdem eine vorgegebene Anzahl der Impulse innerhalb einer Abtastperiode einer bestehenden Länge zugeführt sind, betreibbar ist, so daß die Geschwindigkeit der Treibeeinrichtung allmählich auf einen der neuen Länge der Abtastperiode entsprechenden Wert variiert wird.

2. Bildlesesystem nach Anspruch 1, bei dem die Stoppeinrichtung über eine Anzahl von sukzessiven Abtastperioden der existierenden Länge betreibbar ist, bevor die Geschwindigkeitseinstelleinrichtung (5) die neue Länge der Abtastperiode annimmt.

3. Bildlesesystem nach Anspruch 1 oder 2, bei dem die Anzahl von diskreten Werten der Abtastperiode (t₁, t₂ ..... t₁₀) ganzzahlige Vielfache einer für den Bildsensor (1) zum Abtasten jeder Zeile erforderlichen Leseperiode (D1, D2 ..... D8) sind.

4. Bildlesesystem nach Anspruch 3, bei dem der Bildsensor (1) jede Zeile eine ganze Anzahl von Malen innerhalb der Abtastperiode abtastet.

5. Bildlesesystem nach Anspruch 4, weiterhin enthaltend eine Puffereinrichtung (19) zum temporären Speichern von durch den Bildsensor (1) gelesenen Daten, und bei dem innerhalb jeder Abtastperiode die Puffereinrichtung nur die durch eine erste Abtastung der Zeile durch den Bildsensor erzeugten Daten speichert.

6. Bildlesesystem nach Anspruch 3, 4 oder 5, bei dem die Stoppeinrichtung betreibbar ist, wenn die Periode von einem der Impulse kleiner ist als die Leseperiode des Bildsensors (1).

7. Bildlesesystem nach einem der vorhergehenden Ansprüche, bei dem die Treibesteuereinrichtung (4) eine Datentabelle (43) zum Bestimmen der Impulszyklusperiode entsprechend der Abtastperiode, sowie einen Impulsgenerator (44) zum Erzeugen der Impulse basierend auf von der Datentabelle erhaltenen Daten enthält.

8. Bildlesesystem nach einem der vorhergehenden Ansprüche, bei dem die Treibeeinrichtung (3) ein Schrittmotor mit einer der vorgegebenen Anzahl von Impulsen entsprechenden Anzahl von Phasen ist.

9. Bildlesesystem nach einem der vorhergehenden Ansprüche, weiterhin enthaltend eine Puffereinrichtung (19) zum temporären Speichern von durch den Bildsensor (1) gelesenen Daten, und bei dem die Abtastperiode in Übereinstimmung mit der Menge von in der Puffereinrichtung gehaltenen Daten ausgewählt wird.

10. Bildlesesystem nach einem der vorhergehenden Ansprüche zur Verwendung bei einer Faksimileübertragung, bei dem die Abtastperiode entsprechend der Qualität einer verwendeten Übertragungsleitung ausgewählt wird.

## Revendications

1. Système de lecture d'image comprenant :
un capteur d'image (1) pour lire un manuscrit en le balayant ligne par ligne ;
un dispositif d'entraînement (3) pour déplacer le manuscrit par rapport au capteur d'image (1) de sorte que le capteur d'image balaye des lignes successives pendant des périodes de balayage successives (t₁, t₂, t₃, ...), les périodes de balayage ayant une longueur sélectionnée à partir d'une pluralité de valeurs discrètes ;
un dispositif de commande d'entraînement (4) pour commander la vitesse du dispositif d'entraînement (3) en lui appliquant des impulsions ayant une période de cycle d'impulsions dépendant de la longueur de la période de balayage ; et
un dispositif de réglage de vitesse (5) pour faire varier la période du cycle d'impulsions des impulsions fournies par le dispositif de commande d'entraînement (4) selon la longueur de la période de balayage ;
caractérisé en ce que :
le dispositif de réglage de vitesse (5) comprend un dispositif d'arrêt qui est utilisable, en réponse à une sélection d'une nouvelle longueur de la période de balayage, pour arrêter la fourniture desdites impulsions après qu'un nombre prédéterminé desdites impulsions ait été appliqué pendant une période de balayage d'une longueur existante, de sorte que la vitesse du dispositif d'entraînement change progressivement de valeur selon la nouvelle longueur de la période de balayage.

2. Système de lecture d'image selon la revendication 1, dans lequel ledit dispositif d'arrêt est utilisable sur une pluralité de périodes de balayage successives de la longueur existante, avant que ledit dispositif de réglage de vitesse (5) adopte la nouvelle longueur de la période de balayage.

3. Système de lecture d'image selon la revendication 1 ou la revendication 2, dans lequel ladite pluralité de valeurs discrètes de la période de balayage (t₁, t₂, ... t₁₀) sont des entiers multiples d'une période de lecture (D₁, D₂, ... D₈) requise par le capteur d'image (1) pour balayer chaque ligne.

4. Système de lecture d'image selon la revendication 3, dans lequel le capteur d'image (1) balaye chaque ligne un nombre entier de fois pendant la période de balayage.

5. Système de lecture d'image selon la revendication 4, comprenant en outre un dispositif de mémoire (19) pour stocker temporairement des données lues par un capteur d'image (1), et dans lequel, dans chaque période de balayage, le dispositif de mémoire tampon stocke seulement les données générées par un premier balayage de la ligne par un capteur d'image.

6. Système de lecture d'image selon la revendication 3, 4, ou 5, dans lequel ledit dispositif d'arrêt est utilisable lorsque la période d'une desdites impulsions est inférieure à la période de lecture du capteur d'image (1).

7. Système de lecture d'image selon l'une quelconque des revendications précédentes dans lequel le dispositif de commande d'entraînement (4) comprend une table de données (43) pour déterminer la période du cycle d'impulsions en fonction de la période de balayage, et un générateur d'impulsions (44) pour générer lesdites impulsions sur la base des données obtenues à partir de ladite table de données.

8. Système de lecture d'image selon l'une quelconque des revendications précédentes, dans lequel le dispositif d'entraînement (3) est un moteur pas à pas ayant un nombre de phases correspondant audit nombre prédéterminé d'impulsions.

9. Système de lecture d'image selon l'une quelconque des revendications précédentes, comprenant en outre un dispositif de mémoire tampon (19) pour stocker temporairement des données lues par le capteur d'image (1), et dans lequel la période de balayage est sélectionnée en fonction de la quantité de données contenues dans le dispositif de mémoire tampon.

10. Système de lecture d'image selon l'une quelconque des revendications précédentes, utilisé dans une transmission de télécopieur, dans lequel la période de balayage est sélectionnée en fonction de la qualité d'une ligne de transmission utilisée.
